(19) Europäisches Patentamt
European Patent Office
Office européen des brevets

(11) **EP 2 565 760 A1**

(12) **EUROPEAN PATENT APPLICATION**
published in accordance with Art. 153(4) EPC

(43) Date of publication:
**06.03.2013 Bulletin 2013/10**

(21) Application number: **10858554.8**

(22) Date of filing: **18.11.2010**

(51) Int Cl.:
*G06F 3/048* (2013.01)      *G06F 9/44* (2006.01)

(86) International application number:
**PCT/CN2010/078890**

(87) International publication number:
**WO 2012/051766 (26.04.2012 Gazette 2012/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2010  CN 201010512237**

(71) Applicant: **ZTE Corporation**
**Shenzhen, Guangdong 518057 (CN)**

(72) Inventors:
• **HU, Bo**
  **Guangdong 518057 (CN)**

• **ZHAO, Wei**
  **Guangdong 518057 (CN)**
• **ZHANG, Yujie**
  **Guangdong 518057 (CN)**
• **WEI, Lanying**
  **Guangdong 518057 (CN)**

(74) Representative: **Bittner, Bernhard et al**
**Hannke Bittner & Partner**
**Patent- und Rechtsanwälte**
**Ägidienplatz 7**
**DE-93047 Regensburg (DE)**

(54) **METHOD AND MOBILE TERMINAL FOR AUTOMATICALLY IDENTIFYING ROTARY GESTURE**

(57)    A method and mobile terminal for automatically recognizing a rotation gesture are provided. The method includes: obtaining the touch control information of fingers on the touch screen of a mobile terminal (201), and preprocessing the data in the obtained touch control information (202); and recognizing a rotation gesture according to the preprocessed data, the touch control information, and the preset time variation threshold, the preset angle variation threshold and the preset distance variation threshold. The method and mobile terminal can automatically recognize the rotation gestures of a mobile terminal.

Fig. 2

201, obtaining the touch control information of fingers on the touch screen of a mobile terminal

202, preprocessing the data in the obtained touch control information

203, recognizing a rotation gesture according to the preprocessed data, the touch control information and the preset time variation threshold, the preset angle variation threshold and the preset distance variation threshold

204, performing functions corresponding to the rotation gesture on the mobile terminal according to the recognition result

EP 2 565 760 A1

## Description

## TECHNICAL FIELD

The present disclosure relates to the gesture recognition technology in the mobile terminal field, particularly to a method and mobile terminal for automatically recognizing a rotation gesture.

## BACKGROUND

The rapid development of mobile communication has more or less caused changes of all social aspects. At present, mobile terminals have become an indispensable part of the life of almost everybody. In the future, the naturalness, multi-channel and collaboration will be the main development directions of the man-machine interaction of mobile terminals. Attempts will be made to form multi-channel multimode natural dialogues between users and mobile terminals through gestures, voice, expressions and other human's natural communication means, thereby improving user experience effect. The development trend of the User Interface (UI) of mobile terminals from "technology centered" to "user centered" makes the natural and intuitive man-machine interaction become an inevitable development trend of the UI. Wherein, gesture-based interaction as a UI interactive form suiting the trend of natural interaction is attracting increasing attention and being more widely applied.

Mobile terminal manufacturers have made great effort in UI technology, including UI design, mouse, keyboard, tracking ball, gravity sensor and etc. Following the popularization of intelligent mobile terminals, the functions of a touch screen become increasingly irreplaceable, while gesture also becomes a new technique of man-machine interaction owing to its novelty, convenience and usability. The man-machine interaction which is based on natural gestures and allows touching with two fingers is a new interactive technique for natural and harmonious dialogues between users and mobile terminals. This method is a "user centered" interaction, differentiating from a conventional method by which the touch screen can be operated with only one finger, this method allows a user to operate one mobile terminal with a plurality of fingers in the same time and even allows a plurality of users to operate one mobile terminal in the same time. Operating with a plurality of fingers in the same time means the possibility of processing more complex tasks, so it is an urgent task for mobile terminal manufacturers to realize fast and efficient gesture-based interaction.

At present, Apple Inc. is doing research in this aspect. The realized functions mainly include Slide to Unlock, Pinch and Flip, but they focus on the UI design. Besides, there is also bottom-layer gesture interaction processing done by some touch screen manufacturers, which mainly research some bottom-layer algorithms and structures, but due to different algorithms and structures, the mobile terminals produced by different manufacturers can hardly realize mutual compatibility.

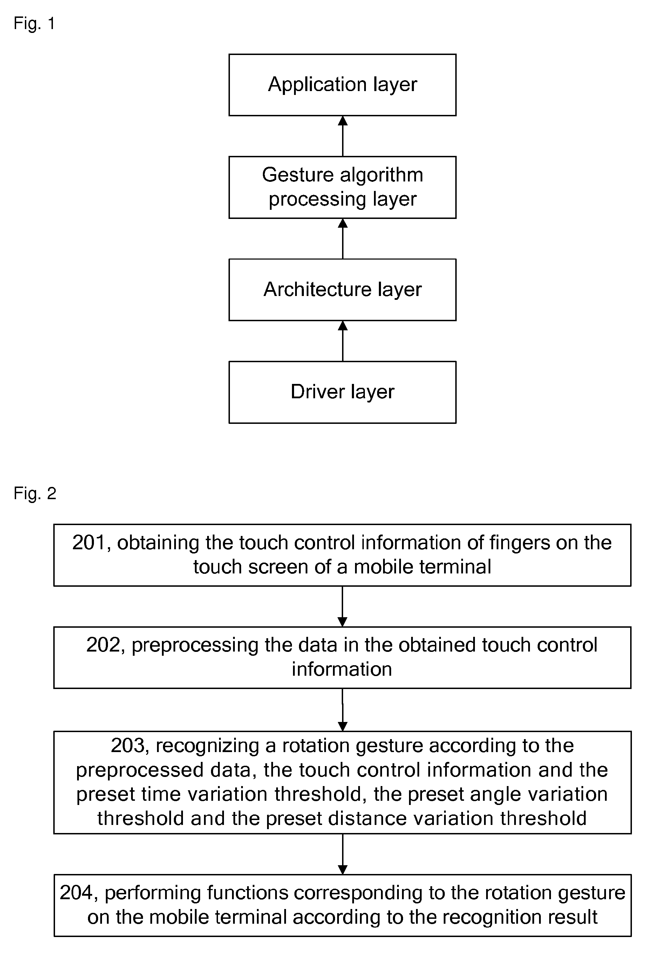

Fig. 1 is a schematic diagram illustrating structure of a system for realizing gesture recognition on an Android platform in the prior art. As shown in Fig. 1, the action of clockwise or anticlockwise rotation of two fingers is done once. Supposing the driver layer reports data to the architecture layer at a frequency of 80Hz, then the architecture layer needs to perform calculation 80*N times a second, wherein N represents the finger contact information needed by a complete event. The contact information mainly includes: coordinate value x and coordinate value y with the left top corner of the screen of the mobile terminal as the origin, finger width w, finger pressure p on the screen, value of Synchronize Multi-Touch Report (SYN_MT_REPORT), and value of Synchronize Report (SYN_REPORT); when there is only one finger, then N=6; when there are two fingers, then N=11; when there are M fingers, then N = 5*M+1. The architecture layer preprocesses the information of a complete event and puts the processed information in motion class. As the driver layer reports data to the architecture layer at a frequency of 80Hz, therefore motion can be generated at most 80 times a second. Then the data preprocessed each time which are in motion class are sent to the gesture algorithm processing layer where they are processed. The gesture algorithm processing layer performs processing once every 28ms, so calculation is conducted about 35 times a second.

In the prior art, the recognition of multi-finger gestures supported by the gesture algorithm processing layer is only the recognition of the Pinch gesture, i.e., the opening or closing of two fingers. However, users expect more gestures available.

## SUMMARY

In view of the above problem, the main object of the present disclosure is to provide a method and mobile terminal for automatically recognizing a rotation gesture, which can realize automatic recognition of the rotation gestures of a mobile terminal.

To achieve the foregoing object, the technical solutions of the present disclosure are realized in the following way.

The present disclosure provides a method for automatically recognizing a rotation gesture, which includes:

obtaining touch control information of fingers on a touch screen of a mobile terminal;

preprocessing data in the obtained touch control information; and

recognizing a rotation gesture according to the preprocessed data, the touch control information, a preset time variation threshold, a preset angle variation threshold, and a preset distance variation threshold.

In the foregoing method, obtaining the touch control information of fingers on the touch screen of a mobile terminal may include:

obtaining, by a chip in a driver layer of the mobile terminal, in real time the touch control information of fingers on the touch screen of the mobile terminal;

wherein the touch control information may include coordinate values of fingers in a coordinate system with a left top corner of the touch screen of the mobile terminal as its origin, finger width, and finger pressure on the touch screen;

the method may further include:

encapsulating coordinate values in the touch control information into a combined value of coordinate values;

encapsulating the finger width and pressure in the touch control information into a combined value of finger width and pressure; and

reporting the two combined values to an architecture layer of the mobile terminal.

In the foregoing method, preprocessing the data in the obtained touch control information may include:

recording, by the architecture layer of the mobile terminal, motion state information of fingers into objects of motion class according to the data in the touch control information; and

recording, by the architecture layer, the data in the touch control information into the objects of motion class, and sending the data in the objects of motion class to a gesture algorithm processing layer;

wherein, the motion state information may include: one or more fingers being moving (ACTION_MOVE), all fingers being lifted (ACTION_UP) and one or more fingers pressing down (ACTION_DOWN).

In the foregoing method, recognizing a rotation gesture may include:

obtaining, by the gesture algorithm processing layer of the mobile terminal, a motion state of fingers on the touch screen according to the preprocessed data;

when it is determined that the motion state is ACTION_MOVE, and it is determined, according to the number of finger-separating separators of the touch control information, that two fingers are moving on the touch screen, recording in real time current coordinates of the two fingers and a current time, and calculating a ratio of distances between the two fingers, a time variation and an absolute value of angle variation; and

determining the rotation gesture is a valid gesture, when a ratio of distances between the two fingers in two times is within a valid range of the preset distance variation, a time variation is greater than the preset time variation threshold, and an absolute value of angle variation is greater than the preset angle variation threshold.

The foregoing method may further include:

determining the rotation gesture is an invalid gesture when the motion state is determined to be ACTION_UP or ACTION_DOWN.

The foregoing method may further include:

saving an angle variation of the rotation gesture when a ratio of distances between two fingers in two times is within a valid range of the preset distance variation, an absolute value of the angle variation is greater than the preset angle variation threshold, and a time variation is not greater than the preset time variation threshold; and

determining, by the gesture algorithm processing layer of the mobile terminal, the rotation gesture is valid when the motion state of fingers received next time is ACTION_UP.

The method may further include:

performing functions corresponding to the rotation gesture on the mobile terminal according to a recognition result.

In the foregoing method, performing functions corresponding to the rotation gesture on the mobile terminal according to the recognition result may include:

receiving, by an application layer of the mobile terminal, the recognition result sent by the gesture algorithm processing layer, and determining an angle variation;

performing a clockwise rotation of a picture on the mobile terminal when the angle variation is smaller than 0;

performing an anticlockwise rotation of a picture on the mobile terminal when the angle variation is greater than 0; and

performing no operation when the angle variation is 0.

The present disclosure also provides a mobile terminal for automatically recognizing a rotation gesture, which includes: a driver layer, an architecture layer and a gesture algorithm processing layer, wherein:

the driver layer is configured to obtain touch control information of fingers on a touch screen of the mobile terminal;

the architecture layer is configured to preprocess data in the obtained touch control information; and

the gesture algorithm processing layer is configured to recognize a rotation gesture according to the preprocessed data, the touch control information, a preset time variation threshold, a preset angle variation threshold, and a preset distance variation threshold.

The foregoing mobile terminal may further include:

an application layer configured to perform functions corresponding to the rotation gesture on the mobile terminal according to a recognition result; and

a database configured to save the preset time variation threshold, the preset angle variation threshold and the preset distance variation threshold.

In the foregoing mobile terminal, the gesture algorithm processing layer may be further configured to determine the rotation gesture is an invalid gesture when a motion state is "all fingers being lifted (ACTION_UP)" or "one or more fingers pressing down (ACTION_DOWN)"; and

the gesture algorithm processing layer may be further configured to:

save an angle variation of the rotation gesture when a ratio of distances between two fingers in two times is within a valid range of the preset distance variation, an absolute value of the angle variation is greater than the preset angle variation threshold, and a time variation is not greater than the preset time variation threshold; and

determine the rotation gesture is valid when the motion state of fingers received next time is ACTION_UP.

The method and mobile terminal for automatically recognizing a rotation gesture in the present disclosure obtain the touch control information of fingers on the touch screen of a mobile terminal and preprocess the data in the obtained touch control information, and can automatically recognize the rotation gesture of the mobile terminal according to the preprocessed data, the touch control information and the preset time variation threshold, the preset angle variation threshold and the preset distance variation threshold. The present disclosure can provide more gesture options for users, expand the application of gesture recognition of mobile terminals, and can realize rotation of pictures in a mobile terminal through rotation gestures. Further, during reporting the obtained touch control information, encapsulation processing is performed on the data, and the quantity of the reported touch control information is halved, therefore, the processing capability of the mobile terminal is significantly improved and automatic recognition of gestures is realized fast and efficiently, thereby creating good user experience for the users of mobile terminals with a touch screen and making the user's operation more convenient and faster.

**BRIEF DESCRIPTION OF THE DRAWINGS**

Fig. 1 is a schematic diagram illustrating structure of a system for realizing gesture recognition on an Android platform in the prior art;

Fig. 2 is a schematic flowchart illustrating a method for automatically recognizing a rotation gesture according to the present disclosure;

Fig. 3 is a schematic diagram illustrating the data format under the condition that different number of fingers press down according to the present disclosure;

Fig. 4 is a schematic diagram illustrating structure of a mobile terminal for automatically recognizing a rotation gesture according to the present disclosure.

**DETAILED DESCRIPTION**

The basic principle of the present disclosure is: obtaining the touch control information of fingers on the touch screen of a mobile terminal and preprocessing the data in the obtained touch control information; and recognizing a rotation gesture according to the preprocessed data, the touch control information and the preset time variation threshold, the preset angle variation threshold and the preset distance variation threshold.

Below the present disclosure is further elaborated by referring to accompanying drawings and embodiments.

The present disclosure provides a method for automatically recognizing a rotation gesture. Fig. 2 is a schematic flowchart illustrating a method for automatically recognizing a rotation gesture according to the present disclosure. As shown in Fig. 2, the method includes the following steps.

Step 201: obtaining the touch control information of fingers on the touch screen of a mobile terminal.

Specifically, the chip in the driver layer of the mobile terminal may obtain in real time the touch control information of fingers on the touch screen of the mobile terminal, and send the touch control information to the architecture layer of the mobile terminal in a data format via a transmission channel connecting the driver layer and the architecture layer. The touch control information includes: coordinate value x and coordinate value y of the finger in a coordinate system with the left top corner of the touch screen of the mobile terminal as its origin, finger width w and finger pressure p on the touch screen.

The maximum resolutions of the coordinate values x and y, finger width w and finger pressure p on the touch screen obtained by the driver layer are all 12bit, which are all 10bit usually, but the resolution allocated to each data in the data format is 32bit and each data only takes up 10bit of the 32bit, thereby causing waste of resolution. For this reason, in this embodiment, coordinate values x and y are encapsulated into a 32bit combined value of coordinate value x and coordinate value y and reported to the architecture layer, wherein x is the higher 16bit of the 32bit and y is the lower 16bit of the 32bit. Likewise, finger width w and pressure p are also encapsulated into a 32bit combined value of finger width w and pressure p and reported to the architecture layer, wherein w is the higher 16bit of the 32bit and p is the lower 16bit of the 32bit. In this way, the touch control information reported by the driver layer is changed to two pairs of data corresponding to each finger from four data corresponding to each finger. Taking 80Hz of frequency at which the driver layer sends the touch control information to the architecture layer for example, the quantity of the reported touch control information is halved, thereby significantly improving the processing capability of the mobile terminal.

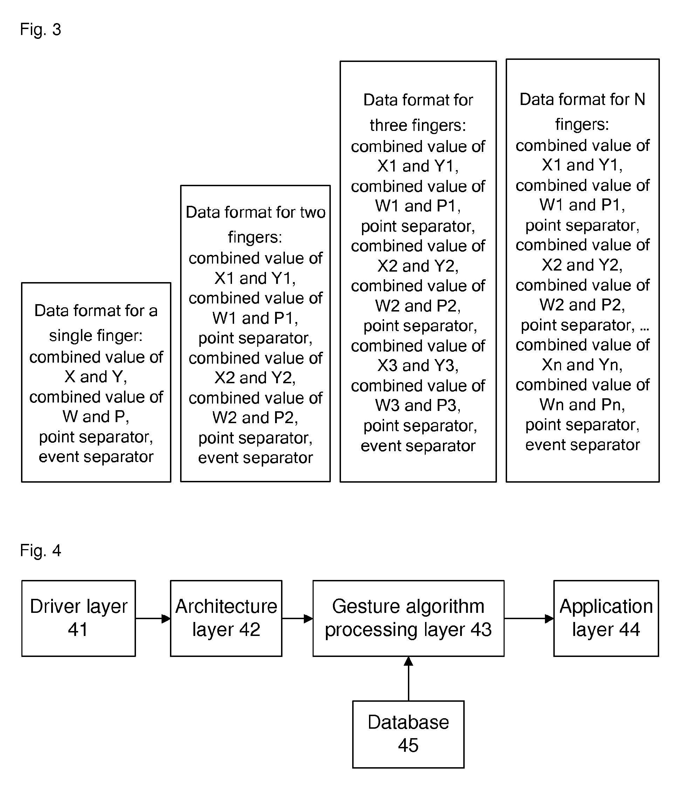

Fig. 3 is a schematic diagram illustrating the data format under the condition that different number of fingers press down according to the present disclosure. Fig. 3 shows the data formats under the condition that a single finger, two fingers, three fingers and N fingers press down respectively. The point separator (SYN_MT_REPORT) is a finger-separating separator of the touch control information, and the event ending character (SYN_REPORT) is a separator for separating the touch control information sent each time. The driver layer sends the touch control information to the architecture layer at a frequency, which is called interruption frequency. Different touch screen manufacturers provide different interruption frequencies, which are typically 60Hz~80Hz, and the interruption frequency is up to 250Hz in particular cases.

Step 202: preprocessing the data in the obtained touch control information.

Specifically, the architecture layer of the mobile terminal receives the touch control information from the driver layer according to the data format of the touch control information sent by the driver layer. For example, when the driver layer sends the touch control information to the architecture layer in a sequence of the combined value of the coordinate value x and coordinate value y, and the combined value of finger width w and finger pressure p on the touch screen, the architecture layer will analyze the touch control information in a reverse sequence to obtain in turn finger pressure p on the touch screen, finger width w, coordinate value y and coordinate value x. The architecture layer preprocesses the data in the received touch control information, i.e., records the motion state of fingers into the objects of motion class according to the data in the received touch control information, wherein the motion state includes ACTION_MOVE, ACTION_UP and ACTION_DOWN. ACTION_MOVE represents that one or more fingers are moving, ACTION_UP represents that all fingers are lifted, and ACTION_DOWN represents that one or more fingers press down.

The architecture layer may recognize the number of fingers on the touch screen of the mobile terminal according to the touch control information sent by the driver layer, saves the obtained number of fingers into the nNempointers of motion event in the Android program, and determines the motion state of fingers according to the obtained number of fingers. When the number of fingers determined according to the touch control information has no change from the number of fingers determined last time, then the motion state of fingers is ACTION_MOVE; when it is determined according to the touch control information that there is no finger on the touch screen of the mobile terminal, then the motion state of fingers is ACTION_UP; when one or more fingers press down according to the comparison between the number of fingers determined according to the touch control information and the number of fingers determined last time, then the motion state of fingers is ACTION_DOWN. Meanwhile, the architecture layer records the data in the touch control information into the objects of motion class, so as to obtain the movement locus of each finger according to the recorded data. The architecture layer sends the data in the objects of motion class to the gesture algorithm processing layer. The motion class is a class program language, data of a same nature are stored in the object of one motion class. In the present disclosure, the object of motion class is equivalent to a storage medium where the touch control information is stored and preprocessed.

Step 203: recognizing a rotation gesture according to the preprocessed data, the touch control information and the preset time variation threshold, the preset angle variation threshold and the preset distance variation threshold.

Specifically, the gesture algorithm processing layer of the mobile terminal receives data in motion class sent by the architecture layer. The motion state of fingers on the touch screen may be known according to the received motion state. SYN_MT_REPORT in the touch control information is a finger-separating separator of the touch control information. Therefore, according to the number of SYN_MT_REPORT in the touch control information, the number of the fingers on the touch screen can be known.

The gesture algorithm processing layer obtains the motion state of fingers according to the data in motion class. When the motion state of fingers is ACTION_UP or ACTION_DOWN, it is indicated that all fingers are lifted, or one or more fingers press down, so no fingers move on the mobile terminal and this rotation gesture is an invalid gesture. Therefore, recognition of rotation gestures is not needed and the flow is ended.

If the motion state of fingers is ACTION_MOVE, when the gesture algorithm processing layer determines the number of fingers moving on the touch screen is two, it is explained supposing the gesture of the two fingers is clockwise or anticlockwise rotation: when the two fingers move on the touch screen of the mobile terminal, the gesture algorithm processing layer records in real time the current coordinates $(x_1, y_1)$ and $(x_2, y_2)$ of the two fingers and the current time $T_1$, and calculates the distance between the two fingers

$$S_1 = \sqrt{(x_2 - x_1)^2 + (y_2 - y_1)^2} \; ; \quad \text{the gesture algo-}$$

rithm processing layer calculates the included angle $\theta_1$ between the straight line formed by the two points and the horizontal line according to the formula $\arcsin((y_2 - y_1)/S_1)$; when the next time for recording the coordinates of the two fingers comes, the same method is employed to record the coordinates of the two fingers, the distance between the two fingers $S_2$ and $T_2$ are calculated and $\theta_2$ is calculated by the above method.

In the database of the mobile terminal, time variation threshold $\Delta\tau$, angle variation threshold $\Delta\theta$, and valid range $\Delta S$ of distance variation are stored in advance, wherein the time variation threshold $\Delta\tau$ is the time interval between two times when the driver layer sends the touch control information to the architecture layer. $\Delta\tau$ may be set according to the interruption frequency, the angle variation threshold $\Delta\theta$ and the valid range $\Delta S$ of distance variation are set according to the user's requirements. For example, when the user requires that only no change of the distances between the two fingers in two times can be recognized, then $\Delta S$ may be [0.9, 1.1]; when the user requires that only decrease of the distances between the two fingers in two times can be recognized, then $\Delta S$ may be (0, 0.9); when the user requires that only increase of the distances between the two fingers in two times can be recognized, then $\Delta S$ may be (1.1, $+\infty$); the gesture

algorithm processing layer extracts $\Delta\tau$, $\Delta S$ and $\Delta\theta$ from the database, determined whether S2/S1 is within the range of $\Delta S$, compares the size of time variation $T_2$-$T_1$ and $\Delta\tau$, and compares the size of the absolute value $|\theta_2$-$\theta_1|$ of angle variation and $\Delta\theta$. When the value of S2/S1 is within the range of $\Delta S$ and $T_2$-$T_1 > \Delta\tau$, and $|\theta_2$-$\theta_1| \geq \Delta\theta$, the rotation gesture of the two finger this time is valid. The value $T_2$-$T_1$ of the rotation gesture is calculated. When the rotation gesture of the two fingers this time is invalid, the next rotation gesture will be recognized. The gesture algorithm processing layer sends the recognition result, i.e., the value of $T_2$-$T_1$ of the rotation gesture to the application layer of the mobile terminal.

There may be a special circumstance: the value of S2/S1 is within the range of $\Delta S$ and $|\theta_2$-$\theta_1| \geq \Delta\theta$, but $T_2$-$T_1 > \Delta\tau$ is not satisfied. In respect to the rotation gesture under this circumstance, the calculated data are saved in the database. When a motion state of fingers is received next time, if the motion state of fingers is ACTION_UP, i.e., the fingers are all lifted after this rotation gesture is executed, the gesture algorithm processing layer of the mobile terminal still considers this rotation gesture as valid, and the gesture algorithm processing layer still sends the recognition result, i.e., the value of $T_2$-$T_1$ of the rotation gesture, to the application layer of the mobile terminal.

Step 204: performing functions corresponding to the rotation gesture on the mobile terminal according to the recognition result.

Specifically, the application layer of the mobile terminal receives the recognition result sent by the gesture algorithm processing layer and determines the value of angle variation $\theta_2$ - $\theta_1$; when the value of angle variation $\theta_2$ - $\theta_1$ is smaller than 0, then the rotation gesture is clockwise, for example, the function of clockwise rotation of a picture may be realized on the mobile terminal, and the rotation angle of the picture may be obtained through calculation based on the value of angle variation $\theta_2$ - $\theta_1$; when the value of angle variation $\theta_2$ - $\theta_1$ is greater than 0, then the rotation gesture is anticlockwise, for example, the function of anticlockwise rotation of a picture may be realized on the mobile terminal, and the rotation angle of the picture may be obtained through calculation based on the value of angle variation $\theta_2$ - $\theta_1$; when the value of angle variation $\theta_2$ - $\theta_1$ is 0, then it is indicated that the neither of two fingers moves on the touch screen of the mobile terminal, and no operation will be executed.

The present disclosure may apply in various operating systems, such as Windows Mobile operating system, Symbian operating system and Android operating system, and may also be applied in camera focusing (rotate clockwise to zoom in, and rotate anticlockwise to zoom out) and Global Positioning System.

To realize the foregoing method, the present disclosure also provides a mobile terminal for automatically recognizing a gesture. Fig. 4 is a schematic diagram illustrating structure of a mobile terminal for automatically recognizing a rotation gesture according to the present disclosure. As shown in Fig. 4, the mobile terminal includes: a driver layer 41, an architecture layer 42 and a gesture algorithm processing layer 43, wherein:

the driver layer 41 is configured to obtain the touch control information of fingers on the touch screen of the mobile terminal;

the architecture layer 42 is configured to preprocess the data in the obtained touch control information;

the gesture algorithm processing layer 43 is configured to recognize a rotation gesture according to the preprocessed data, the touch control information and the preset time variation threshold, the preset angle variation threshold and the preset distance variation threshold.

The mobile terminal further includes:

an application layer 44 configured to perform the functions corresponding to the rotation gesture on the mobile terminal according to the recognition result;

a database 45 configured to save the preset time variation threshold, the preset angle variation threshold and the preset distance variation threshold.

The gesture algorithm processing layer 43 is further configured to determine the rotation gesture is an invalid gesture when the motion state is ACTION_UP or ACTION_DOWN.

The gesture algorithm processing layer 43 is further configured to save the angle variation of the rotation gesture when the ratio of distances between two fingers in two times is within the valid range of the preset distance variation, and the absolute value of angle variation is greater than the preset angle variation threshold, and time variation is not greater than the preset time variation threshold; and to determine the rotation gesture is valid when the motion state of fingers received next time is ACTION_UP.

Obtaining the touch control information of fingers on the touch screen of a mobile terminal includes:

The chip in the driver layer 41 of the mobile terminal obtains in real time the touch control information of fingers on the touch screen of the mobile terminal; the touch control information includes: the coordinate values of fingers in a coordinate system with the left top corner of the touch screen of the mobile terminal as its origin, finger width, and finger pressure on the touch screen; the coordinate values are encapsulated into a combined value of coordinate values, the finger width and pressure are encapsulated into a combined value of finger width and pressure, and the two combined values are reported to the architecture layer 42 of the mobile terminal.

Preprocessing the data in the obtained touch control information includes:

the architecture layer 42 of the mobile terminal records the motion state information of fingers into the objects of motion class according to the data in the touch control information; the architecture layer 42 records the data in the touch control information into the objects of motion class, and sends the data in the objects of motion class to the gesture algorithm processing layer 43; the motion state information includes: ACTION_MOVE, ACTION_UP and ACTION_DOWN.

Recognizing a rotation gesture includes:

the gesture algorithm processing layer 43 of the mobile terminal obtains the motion state of fingers on the touch screen according to the preprocessed data; when it is determined that the motion state is ACTION_MOVE, and it is determined, according to the number of the finger-separating separators of the touch control information, that two fingers are moving on the touch screen, the current coordinates of the two fingers and the current time are recorded in real time, the ratio of distances between the two fingers, the time variation and the absolute value of angle variation are calculated; when the ratio of distances between the two fingers in two times is within the valid range of the preset distance variation, the time variation is greater than the preset time variation threshold, and the absolute value of angle variation is greater than the preset angle variation threshold, the rotation gesture is determined to be a valid gesture.

Performing the functions corresponding to the rotation gesture on the mobile terminal according to the recognition result includes:

the application layer 44 of the mobile terminal receives the recognition result sent by the gesture algorithm processing layer and determines the angle variation $\theta_2 - \theta_1$; when the angle variation $\theta_2 - \theta_1$ is smaller than 0, the rotation gesture is clockwise, and clockwise rotation of a picture is performed on the mobile terminal; when the angle variation $\theta_2 - \theta_1$ is greater than 0, the rotation gesture is anticlockwise, and anticlockwise rotation of a picture is realized performed on the mobile terminal; when angle variation $\theta_2 - \theta_1$ is 0, it is indicated that neither of the fingers moves on the touch screen of the mobile terminal and no operation will be executed.

The foregoing descriptions are preferred embodiments of the present disclosure and are not intended to limit the protection scope of the present disclosure. Any modifications, identical replacements and improvements, etc, made without departing from the spirit and principle of the present disclosure shall be within the protection scope of the present disclosure.

**Claims**

1. A method for automatically recognizing a rotation gesture, comprising:

   obtaining touch control information of fingers on a touch screen of a mobile terminal;
   preprocessing data in the obtained touch control information; and
   recognizing a rotation gesture according to the preprocessed data, the touch control information, a preset time variation threshold, a preset angle variation threshold, and a preset distance variation threshold.

2. The method according to claim 1, wherein the obtaining the touch control information of fingers on the touch screen of a mobile terminal comprises:

   obtaining, by a chip in a driver layer of the mobile terminal, in real time the touch control information of fingers on the touch screen of the mobile terminal;
   wherein the touch control information comprises coordinate values of fingers in a coordinate system with a left top corner of the touch screen of the mobile terminal as its origin, finger width, and finger pressure on the touch screen;
   the method further comprising:

      encapsulating coordinate values in the touch control information into a combined value of coordinate values;
      encapsulating the finger width and pressure in the touch control information into a combined value of finger width and pressure; and
      reporting the two combined values to an architecture layer of the mobile terminal.

3. The method according to claim 1, wherein the preprocessing the data in the obtained touch control information comprising:

   recording, by the architecture layer of the mobile terminal, motion state information of fingers into objects of motion class according to the data in the touch control information; and
   recording, by the architecture layer, the data in the touch control information into the objects of motion class, and sending the data in the objects of motion class to a gesture algorithm processing layer;
   wherein, the motion state information comprises: one or more fingers being moving (ACTION_MOVE), all fingers being lifted (ACTION_UP) and one or more fingers pressing down (ACTION_DOWN).

4. The method according to claim 1, wherein the recognizing a rotation gesture comprising:

   obtaining, by the gesture algorithm processing layer of the mobile terminal, a motion state of fingers on the touch screen according to the preprocessed data;
   when it is determined that the motion state is ACTION_MOVE, and it is determined, according to the number of finger-separating separators of the touch control information, that two fingers are moving on the touch screen, recording in real time current coordinates of the two fingers and a current time, and calculating a ratio of distances between the two fingers, a time variation and an absolute value of angle variation; and

determining the rotation gesture is a valid gesture, when a ratio of distances between the two fingers in two times is within a valid range of the preset distance variation, a time variation is greater than the preset time variation threshold, and an absolute value of angle variation is greater than the preset angle variation threshold.

5. The method according to claim 4, further comprising:

determining the rotation gesture is an invalid gesture when the motion state is determined to be ACTION_UP or ACTION_DOWN.

6. The method according to claim 4 or 5, further comprising:

saving an angle variation of the rotation gesture when a ratio of distances between two fingers in two times is within a valid range of the preset distance variation, an absolute value of the angle variation is greater than the preset angle variation threshold, and a time variation is not greater than the preset time variation threshold; and determining, by the gesture algorithm processing layer of the mobile terminal, the rotation gesture is valid when the motion state of fingers received next time is ACTION_UP.

7. The method according to claim 1, further comprising:

performing functions corresponding to the rotation gesture on the mobile terminal according to a recognition result.

8. The method according to claim 7, wherein the performing functions corresponding to the rotation gesture on the mobile terminal according to the recognition result comprises:

receiving, by an application layer of the mobile terminal, the recognition result sent by the gesture algorithm processing layer, and determining an angle variation; performing a clockwise rotation of a picture on the mobile terminal when the angle variation is smaller than 0; performing an anticlockwise rotation of a picture on the mobile terminal when the angle variation is greater than 0; and performing no operation when the angle variation is 0.

9. A mobile terminal for automatically recognizing a rotation gesture, comprising:

a driver layer, an architecture layer and a gesture algorithm processing layer; wherein:

the driver layer is configured to obtain touch control information of fingers on a touch screen of the mobile terminal; the architecture layer is configured to preprocess data in the obtained touch control information; and the gesture algorithm processing layer is configured to recognize a rotation gesture according to the preprocessed data, the touch control information, a preset time variation threshold, a preset angle variation threshold, and a preset distance variation threshold.

10. The mobile terminal according to claim 9, further comprising:

an application layer configured to perform functions corresponding to the rotation gesture on the mobile terminal according to a recognition result; and a database configured to save the preset time variation threshold, the preset angle variation threshold and the preset distance variation threshold.

11. The mobile terminal according to claim 9, wherein the gesture algorithm processing layer is further configured to determine the rotation gesture is an invalid gesture when a motion state is "all fingers being lifted (ACTION_UP)" or "one or more fingers pressing down (ACTION_DOWN)"; and the gesture algorithm processing layer is further configured to:

save an angle variation of the rotation gesture when a ratio of distances between two fingers in two times is within a valid range of the preset distance variation, an absolute value of the angle variation is greater than the preset angle variation threshold, and a time variation is not greater than the preset time variation threshold; and determine the rotation gesture is valid when the motion state of fingers received next time is ACTION_UP.

Fig. 1

Fig. 2

| 201, obtaining the touch control information of fingers on the touch screen of a mobile terminal |
| --- |

| 202, preprocessing the data in the obtained touch control information |
| --- |

| 203, recognizing a rotation gesture according to the preprocessed data, the touch control information and the preset time variation threshold, the preset angle variation threshold and the preset distance variation threshold |
| --- |

| 204, performing functions corresponding to the rotation gesture on the mobile terminal according to the recognition result |
| --- |

Fig. 3

| Data format for a single finger: combined value of X and Y, combined value of W and P, point separator, event separator | Data format for two fingers: combined value of X1 and Y1, combined value of W1 and P1, point separator, combined value of X2 and Y2, combined value of W2 and P2, point separator, event separator | Data format for three fingers: combined value of X1 and Y1, combined value of W1 and P1, point separator, combined value of X2 and Y2, combined value of W2 and P2, point separator, combined value of X3 and Y3, combined value of W3 and P3, point separator, event separator | Data format for N fingers: combined value of X1 and Y1, combined value of W1 and P1, point separator, combined value of X2 and Y2, combined value of W2 and P2, point separator, ... combined value of Xn and Yn, combined value of Wn and Pn, point separator, event separator |

Fig. 4

| Driver layer 41 | → | Architecture layer 42 | → | Gesture algorithm processing layer 43 | → | Application layer 44 |

Database 45

# INTERNATIONAL SEARCH REPORT

| International application No. |
| --- |
| PCT/CN2010/078890 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: G06F3/-; G06F9/-; H04M1/-; G06K9/-

Documentation searched other than minimum documentation to the extent that such documents are included in the fields searched

Electronic data base consulted during the international search (name of data base and, where practicable, search terms used)

WPI;EPODOC;CNPAT;CNKI   touch, tactile, gesture, hand, finger, rotat+, identif+,   distinguish+, multi+, point, threshold, image, picture, distance, length, angle

**C. DOCUMENTS CONSIDERED TO BE RELEVANT**

| Category* | Citation of document, with indication, where appropriate, of the relevant passages | Relevant to claim No. |
| --- | --- | --- |
| X | CN101667089A (BYD CO., LTD.) 10 Mar. 2010(10.03.2010) description page 3 line 17 to page 12 line 7, Figs.1-2 | 1-11 |
| A | CN101598970A (GENIUS ENTERPRISE CO., LTD.) 09 Dec. 2009(09.12.2009) the whole document | 1-11 |
| A | CN101398741A (MATSUSHITA ELECTRIC IND CO., LTD.) 01 Apr. 2009(01.04.2009) the whole document | 1-11 |
| A | JP9097311A (MATSUSHITA DENKI SANGYO KK) 08 Apr. 1997(08.04.1997) the whole document | 1-11 |

☐ Further documents are listed in the continuation of Box C.　　☒ See patent family annex.

| | |
| --- | --- |
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim (S) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
| --- | --- |
| 08 Jun. 2011(08.06.2011) | **14 Jul. 2011 (14.07.2011)** |

| Name and mailing address of the ISA/CN | Authorized officer |
| --- | --- |
| The State Intellectual Property Office, the P.R.China 6 Xitucheng Rd., Jimen Bridge, Haidian District, Beijing, China 100088 Facsimile No. 86-10-62019451 | **CHEN, Lina** Telephone No. (86-10)62411709 |

Form PCT/ISA /210 (second sheet) (July 2009)

**INTERNATIONAL SEARCH REPORT**
Information on patent family members

| | International application No. |
|---|---|
| | PCT/CN2010/078890 |

| Patent Documents referred in the Report | Publication Date | Patent Family | Publication Date |
|---|---|---|---|
| CN101667089A | 10.03.2010 | NONE | |
| CN101598970A | 09.12.2009 | NONE | |
| CN101398741A | 01.04.2009 | US2009079695A1 | 26.03.2009 |
| | | JP2009080608A | 16.04.2009 |
| JP9097311A | 08.04.1997 | NONE | |

Form PCT/ISA /210 (patent family annex) (July 2009)

# INTERNATIONAL SEARCH REPORT

International application No.

*PCT/CN2010/078890*

Continuation of the second sheet:

CLASSIFICATION OF SUBJECT MATTER

G06F3/048 (2006.01) i
G06F9/44 (2006.01) i

Form PCT/ISA /210 (extra sheet) (July 2009)